# EUROPEAN PATENT APPLICATION

(11) **EP 3 358 165 A1**
(43) Date of publication of application: **08.08.2018**
(21) Application number: 16851650.8
(22) Date of filing: 28.09.2016
(51) Int. Cl.: F02B 39/10, F02B 39/00, H02K 1/27, H02K 1/28

(54) **ELECTRIC SUPERCHARGER**

(30) Priority: 02.10.2015 JP 2015196469
(71) Applicant: IHI Corporation, Tokyo 135-8710 (JP)
(72) Inventor: IIZUKA, Kuniaki, Tokyo 135-8710 (JP); YOSHIDA, Takashi, Tokyo 135-8710 (JP); INOMATA, Tatsumi, Tokyo 135-8710 (JP); OZASA, Takuya, Tokyo 135-8710 (JP); KIMACHI, Kouta, Tokyo 135-8710 (JP)
(74) Representative: TBK
(86) International application number: PCT/JP2016/078658
(87) International publication number: WO 2017/057479

(57) **Abstract**

An electric supercharger includes: a shaft 17 including a small diameter portion 17a, a large diameter portion 17b having a larger diameter than that of the small diameter portion 17a, and a step surface 17d extending in a radial direction from an outer circumferential surface of the small diameter portion 17a to an outer circumferential surface 17b₁ of the large diameter portion 17b; a rotor core 25 in which one end surface 25c of a main body portion 25a through which the small diameter portion 17a is inserted abuts against the step surface 17d, the rotor core 25 formed with, in the main body portion 25a, a receiving hole 25d that is opened to the end surface; a magnet 18 accommodated in the receiving hole; and an end plate 26 inserted with the large diameter portion and facing at least a part of the magnet accommodated in the receiving hole.

## Description

### Technical Field

The present disclosure relates to an electric supercharger in which a rotor core is provided to a shaft.

### Background Art

Conventionally, electric superchargers incorporating an electric motor are known. In the electric superchargers, a rotor is provided to a shaft, and a stator is provided in a housing side. The shaft is rotary driven by mutual force between the rotor and the stator. An impeller is provided to the shaft. When the shaft rotates by the electric motor, the impeller rotates together with the shaft. In this manner, the electric superchargers compress the air in accordance with the rotation of the impeller and deliver the air to an engine.

In an electric supercharger described in Patent Literature 1, a rotor includes a rotor core, a pair of end plates, and a magnet. The rotor core is cylindrical. The end plates have a disc shape. The end plates are provided with a hole through which a shaft is inserted. The rotor core is formed with a receiving hole for accommodating the magnet. The magnet is accommodated in the receiving hole. The rotor core and the end plates are attached to the shaft with the end plates blocking both ends of the receiving hole. A step surface is formed on the shaft with a difference in the outer diameter. One of the end plates abuts against the step surface. The rotor core abuts against the end plate from a side opposite to the step surface. In this manner, the rotor core is positioned.

### Citation List

### Patent Literature

Patent Literature 1: Japanese Patent Application Laid-Open No. 2014-18054

### Summary

### Technical Problem

Meanwhile, the electric supercharger described above is mounted on, for example, an automobile engine. With demands for improving acceleration characteristics of an engine and other demands, such as reducing the weight of rotary parts of electric superchargers. In the case of positioning the rotor core with respect to the shaft with the end plate interposed therebetween as in Patent Literature 1, the shaft becomes longer in the axial direction. For example, it is conceivable to simply shorten the axial length of the shaft facing the rotor core to reduce the weight of rotary parts. However, the axial length of the rotor core which affects performance of the electric motor also becomes shorter. Therefore, performance of the electric motor may be deteriorated.

An object of the present disclosure is to provide an electric supercharger capable of reducing the weight of rotary parts by suppressing deterioration of performance of an electric motor and shortening the axial length of the shaft.

### Solution to Problem

In order to solve the above problem, an electric supercharger according to one embodiment of the present disclosure includes: a shaft including a small diameter portion, a large diameter portion having a larger diameter than that of the small diameter portion, and a step surface extending in a radial direction from an outer circumferential surface of the small diameter portion to an outer circumferential surface of the large diameter portion; a rotor core in which one end surface of a main body portion through which the small diameter portion is inserted abuts against the step surface, the rotor core formed with, in the main body portion, a receiving hole that is opened to the end surface; a magnet accommodated in the receiving hole; and an end plate inserted with the large diameter portion and facing at least a part of the magnet accommodated in the receiving hole.

The end plate may be a non-magnetic body.

A position of the outer circumferential surface of the large diameter portion in the radial direction of the shaft may be positioned inward with respect to the receiving hole.

An annular groove may be formed in the small diameter portion adjacent to the step surface.

### Effects of Disclosure

According to the present disclosure, it is possible to suppress reduction in the efficiency of an electric motor by accurately arranging a rotor core.

### Brief Description of Drawings

Fig. 1 is a schematic cross-sectional view of an electric supercharger.
Fig. 2 is a partial extraction view of a rotor and a shaft in Fig. 1.
Fig. 3(a) is a first diagram for explaining attachment of the rotor to the shaft. Fig. 3(b) is a second diagram for explaining attachment of the rotor on the shaft. Fig. 3(c) is a third diagram for explaining attachment of the rotor to the shaft. Fig. 3(d) is a fourth diagram for explaining attachment of the rotor to the shaft.

### Description of Embodiment

Embodiment of the present disclosure will be described in detail below with reference to the accompanying drawings. Dimensions, materials, other specific numerical values, and the like illustrated in such Embodiment are merely examples for facilitating understanding, and the present disclosure is not limited thereby except for a case where it is specifically mentioned. Note that, in the present specification and the drawings, elements having substantially the same function and structure are denoted by the same symbol, and redundant explanations are omitted. Components not directly related to the present disclosure are not illustrated.

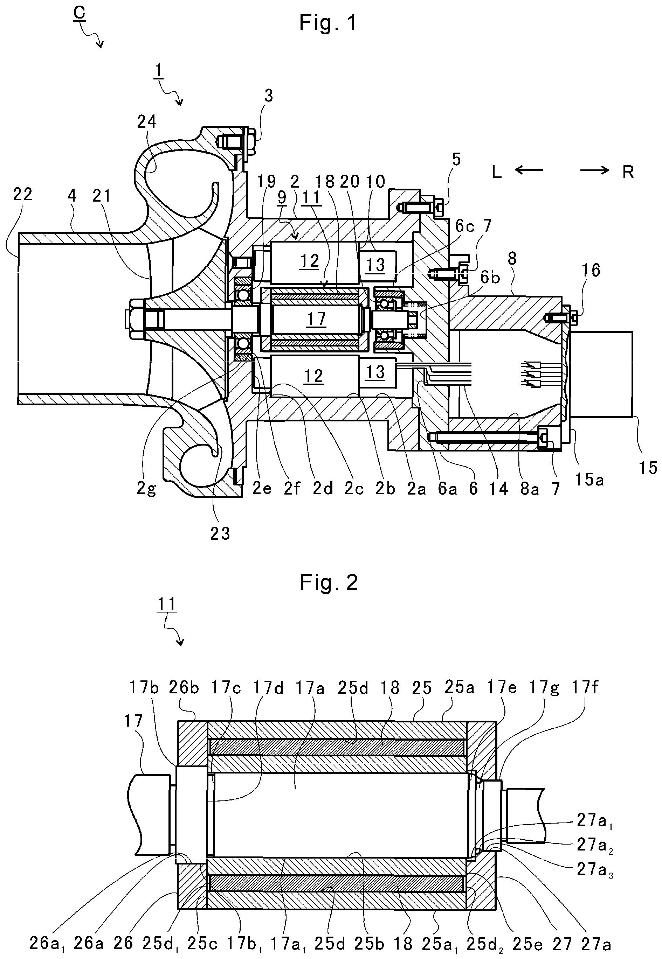

Fig. 1 is a schematic cross-sectional view of an electric supercharger C. Hereinafter, descriptions are given assuming that a direction of an arrow L illustrated in Fig. 1 is the left side of the electric supercharger C. Descriptions are given assuming that a direction of an arrow R illustrated in Fig. 1 is the right side of the electric supercharger C. As illustrated in Fig. 1, the electric supercharger C includes a supercharger main body 1. The supercharger main body 1 includes a motor housing 2 (housing). A compressor housing 4 is connected to the left side of the motor housing 2 by a fastening bolt 3. A plate member 6 is connected to the right side of the motor housing 2 by a fastening bolt 5. A cord housing 8 is connected to the right side of the plate member 6 by a fastening bolt 7. The motor housing 2, the compressor housing 4, the plate member 6, and the cord housing 8 are integrated.

Inside the motor housing 2, a motor hole 2a that opens to the right side in Fig. 1 is formed. An electric motor 9 is accommodated inside the motor hole 2a. The electric motor 9 includes a stator 10 and a rotor 11. The stator 10 is formed by winding a coil 13 around a stator core 12. The stator core 12 has a cylindrical shape.

A plurality of coils 13 are arranged in the circumferential direction of the stator core 12. In the coil 13, phases of supplied AC power are arranged in the order of the U phase, the V phase, and the W phase. A conducting wire 14 is provided to each of the U phase, the V phase, and the W phase. One end of each of the conducting wires 14 is connected to one of the coils 13 of the U phase, the V phase, and the W phase. The conducting wire 14 supplies AC power to the coil 13.

The motor hole 2a is provided with an opposing portion 2b and a narrow portion 2c. The opposing portion 2b faces the stator core 12 in the radial direction. The narrow portion 2c is positioned on the compressor housing 4 side with respect to the opposing portion 2b. An inner diameter of the narrow portion 2c is smaller than an inner diameter of the opposing portion 2b. A locking surface 2d is formed by a difference in the inner diameter of the narrow portion 2c and the opposing portion 2b. The locking surface 2d extends in the radial direction from the narrow portion 2c to the opposing portion 2b. The locking surface 2d has a surface perpendicular to the axial direction of the motor hole 2a. The stator core 12 is inserted into the motor hole 2a from the opening side of the motor hole 2a. The stator core 12 is positioned in the axial direction at a position abutting against the locking surface 2d. The stator core 12 is attached inside the motor hole 2a.

The opening on the right side of the motor hole 2a is closed by the plate member 6. The cord housing 8 connected to the plate member 6 has a code hole 8a. The code hole 8a penetrates in the left-and-right direction in Fig. 1. One end of the code hole 8a is closed by the plate member 6. The plate member 6 is provided with a plate hole 6a. The motor hole 2a and the code hole 8a communicate with each other through the plate hole 6a. The conducting wires 14 extend from the coil 13 to the code hole 8a through the plate hole 6a.

In the code hole 8a, the conducting wires 14 are accommodated. Another end of the conducting wires 14 on the side opposite to the coil 13 is connected to a connector 15. The connector 15 has a flange portion 15a. The flange portion 15a closes another end of the code hole 8a of the cord housing 8. The flange portion 15a is attached to the cord housing 8 by a fastening bolt 16. AC power is supplied to the coil 13 of the stator 10 via the connector 15 and the conducting wires 14. The stator 10 functions as an electromagnet.

Furthermore, the rotor 11 is attached to the shaft 17. The rotor 11 is inserted through the stator core 12. The rotor 11 has a gap with respect to the stator core 12 in the radial direction of the shaft 17. A magnet 18 (permanent magnet) is accommodated inside the rotor 11. The electric motor 9 generates a driving force in the rotation direction on the shaft 17 by mutual force generated between the rotor 11 and the stator 10.

The shaft 17 is inserted through a through hole 2f of the motor housing 2. The through hole 2f penetrates a bottom surface 2e of the motor hole 2a in the axial direction of the shaft 17. A ball bearing 19 is arranged in the through hole 2f. The shaft 17 is pivotally supported by the ball bearing 19.

A boss hole 6b is formed in the plate member 6. One end of the shaft 17 protruding toward the plate member 6 from the rotor 11 is inserted into the boss hole 6b. The plate member 6 is provided with an annular protrusion 6c. The annular protrusion 6c protrudes into the inside of the motor hole 2a. The annular protrusion 6c forms a part of an outer wall forming the boss hole 6b. Inside the boss hole 6b, a ball bearing 20 is arranged. The shaft 17 is pivotally supported by the ball bearing 20.

A compressor impeller 21 is provided to another end of the shaft 17 protruding from the through hole 2f to the inside of the compressor housing 4. The compressor impeller 21 is accommodated in the compressor housing 4 in a freely rotatable manner.

An intake port 22 is formed in the compressor housing 4. The intake port 22 opens to the left side of the electric supercharger C. The intake port 22 is connected to an air cleaner (not illustrated). Furthermore, in a state in which the motor housing 2 and the compressor housing 4 are connected by the fastening bolt 3, a diffuser flow passage 23 is formed. The diffuser flow passage 23 is formed by opposing surfaces of the motor housing 2 and the compressor housing 4. The diffuser flow passage 23 pressurizes the air. The diffuser flow passage 23 is annularly formed outward from an inner side in the radial direction of the shaft 17. On the above inner side in the radial direction ,the diffuser flow passage 23 communicates with the intake port 22 via the compressor impeller 21.

Furthermore, the compressor housing 4 is provided with a compressor scroll flow passage 24. The compressor scroll flow passage 24 is annular. The compressor scroll flow passage 24 is positioned outward in the radial direction of the shaft 17 with respect to the diffuser flow passage 23. The compressor scroll flow passage 24 communicates with an intake port of an engine (not illustrated). The compressor scroll flow passage 24 also communicates with the diffuser flow passage 23. Therefore, when the compressor impeller 21 rotates by the driving force transmitted from the electric motor 9, the air is sucked into the compressor housing 4 from the intake port 22. The sucked air is accelerated by the action of the centrifugal force in the process of flowing through between blades of the compressor impeller 21. The accelerated air is pressurized by the diffuser flow passage 23 and the compressor scroll flow passage 24. The pressurized air is guided to the intake port of the engine.

Fig. 2 is a partial extraction view of the rotor 11 and the shaft 17 in Fig. 1. As illustrated in Fig. 2, the shaft 17 is provided with a small diameter portion 17a. A large diameter portion 17b is formed on the left side (compressor impeller 21 side) with respect to the small diameter portion 17a in Fig. 2. The large diameter portion 17b has a larger outer diameter than that of the small diameter portion 17a. In the small diameter portion 17a, for example, an annular groove 17c is provided. The annular groove 17c is provided at a portion communicating with the large diameter portion 17b.

A step surface 17d is a surface extending in the radial direction of the shaft 17. The step surface 17d extends from an outer circumferential surface 17a₁ of the small diameter portion 17a (annular groove 17c) to an outer circumferential surface 17b₁ of the large diameter portion 17b. That is, the step surface 17d is formed by a difference in the outer diameter between the small diameter portion 17a and the large diameter portion 17b. The annular groove 17c is adjacent to the step surface 17d on its plate member 6 side (right side in Fig. 2). The rotor 11 is fixed to an outer circumference of the shaft 17 on which the small diameter portion 17a, the large diameter portion 17b, and the step surface 17d are formed.

The rotor 11 includes a rotor core 25, the magnet 18, and two end plates 26 and 27. The rotor core 25 has a main body portion 25a. The main body portion 25a is, for example, cylindrical. A rotor hole 25b is formed in the main body portion 25a. The rotor hole 25b penetrates in the axial direction of the shaft 17. A small diameter portion 17a of the shaft 17 is inserted through the rotor hole 25b (inner circumference side of the main body portion 25a). For example, the main body portion 25a is shrink-fitted to the shaft 17. One end surface 25c of the main body portion 25a in the axial direction (left side in Fig. 2) of the shaft 17 abuts against the step surface 17d of the shaft 17. That is, the rotor core 25 abuts against the step surface 17d of the shaft 17, whereby the shaft 17 and the rotor core 25 are directly positioned in the axial direction.

A receiving hole 25d is provided in the main body portion 25a. The receiving hole 25d is positioned outward in the radial direction of the shaft 17 with respect to the rotor hole 25b. The receiving hole 25d penetrates in the axial direction of the shaft 17. A plurality of receiving holes 25d are formed while spaced apart from each other in the circumferential direction of the shaft 17. One end 25d₁ of the receiving hole 25d opens to the end surface 25c of the main body portion 25a. Another end 25d₂ of the receiving hole 25d opens to another end surface 25e of the main body portion 25a. The other end surface 25e is a surface of the main body portion 25a on the right side in Fig. 2 (another end side in the axial direction of the shaft 17, the opposite side to the compressor impeller 21).

The magnet 18 is accommodated in each of the plurality of receiving holes 25d. The magnets 18 adjacent to each other in the circumferential direction of the shaft 17 are arranged such that directions of magnetic poles thereof are opposite to each other. These magnets 18 have a length in the axial direction of the shaft 17 slightly shorter than that of the receiving hole 25d. The magnet 18 is designed not to protrude from the receiving hole 25d even if there is an error in the axial length of the magnet 18 or the receiving hole 25d.

Both ends of the receiving hole 25d are blocked by the end plates 26 and 27. The end plates 26 and 27 are annular plate members. The end plates 26 and 27 are made of a non-magnetic body. The end plates 26 and 27 have central holes 26a and 27a. The central holes 26a and 27a penetrate the end plates 26 and 27, respectively, in the axial direction of the shaft 17. The large diameter portion 17b of the shaft 17 is inserted into the central hole 26a of the end plate 26. The end plate 26 is positioned outward in the radial direction of the large diameter portion 17b. The outer circumferential surface 17b₁ of the large diameter portion 17b is fitted to the end plate 26 (inner circumferential surface 26a₁ of the central hole 26a). This fitting is interference fitting having an interference. The diameter of the outer circumferential surface 17b₁ of the large diameter portion 17b before insertion is slightly larger than that of the inner circumferential surface 26a₁ of the end plate 26. Therefore, the outer circumferential surface 17b₁ of the large diameter portion 17b is incorporated into the inner circumferential surface 26a₁ of the end plate 26 by, for example, shrink-fitting or press fitting.

The position of the outer circumferential surface 17b₁ of the large diameter portion 17b in the radial direction of the shaft 17 is positioned inward with respect to the receiving hole 25d. That is, the position of the inner circumferential surface 26a₁ of the central hole 26a of the end plate 26 in the radial direction of the shaft 17 is positioned inward with respect to the receiving hole 25d. Moreover, the position of the outer circumferential surface 26b of the end plate 26 in the radial direction of the shaft 17 is positioned outward with respect to the receiving hole 25d. The outer circumferential surface 26b of the end plate 26 is roughly flush with the outer circumferential surface 25a₁ of the main body portion 25a.

In this manner, the end 25d₁ of the receiving hole 25d is completely blocked by the end plate 26. The end plate 26 faces the magnet 18 accommodated in the receiving hole 25d.

The shaft 17 is further formed with a tapered portion 17e and a minimum portion 17f. The tapered portion 17e is formed on the right side (the side opposite to the compressor impeller 21) in Fig. 2 with respect to the small diameter portion 17a. The tapered portion 17e has a smaller diameter as it extends further away from the small diameter portion 17a. An outer diameter of the minimum portion 17f is smaller than that of the tapered portion 17e. An annular groove 17g is provided between the tapered portion 17e and the minimum portion 17f. An outer diameter of the annular groove 17g is smaller than the outer diameter of the minimum portion 17f.

In the central hole 27a of the end plate 27, the tapered portion 17e, the annular groove 17g, and the minimum portion 17f are inserted. The central hole 27a has a first inner circumferential surface 27a₁, a second inner circumferential surface 27a₂, and a third inner circumferential surface 27a₃. The first inner circumferential surface 27a₁ faces the tapered portion 17e in the radial direction of the shaft 17. The first inner circumferential surface 27a₁ is spaced apart from the tapered portion 17e in the radial direction of the shaft 17. The second inner circumferential surface 27a₂ faces the annular groove 17g in the radial direction of the shaft 17. The second inner circumferential surface 27a₂ is spaced apart from the annular groove 17g in the radial direction of the shaft 17. The second inner circumferential surface 27a₂ has a smaller diameter as it extends away from the first inner circumferential surface 27a₁. The third inner circumferential surface 27a₃ faces the minimum portion 17f in the radial direction of the shaft 17. The third inner circumferential surface 27a₃ is, for example, shrink-fitted to the minimum portion 17f.

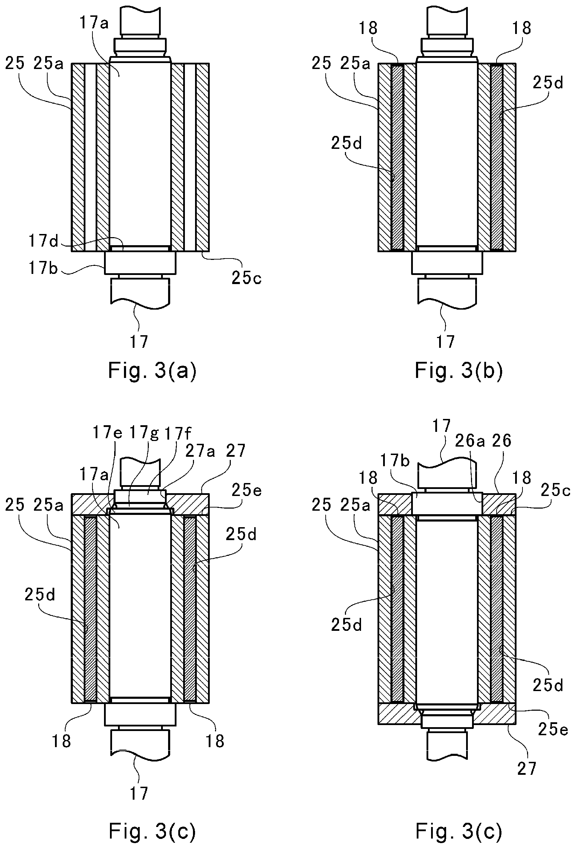

Fig. 3(a) is a first diagram for explaining attachment of the rotor 11 to the shaft 17. Fig. 3(b) is a second diagram for explaining attachment of the rotor 11 on the shaft 17. Fig. 3(c) is a third diagram for explaining attachment of the rotor 11 to the shaft 17. Fig. 3(d) is a fourth diagram for explaining attachment of the rotor 11 to the shaft 17. When the rotor 11 is attached to the shaft 17, for example, the shaft 17 is held such that the step surface 17d faces upward. After the rotor core 25 is warmed up, the shaft 17 is inserted into the rotor core 25 with one end surface 25c of the main body portion 25a of the rotor core 25 facing the step surface 17d.

The main body portion 25a is pressed in the axial direction of the shaft 17, and the small diameter portion 17a of the shaft 17 is inserted into the inner circumference side (rotor hole 25b) of the main body portion 25a. The step surface 17d of the shaft 17 abuts against the end surface 25c of the main body portion 25a as illustrated in Fig. 3(a). When the rotor core 25 cools down, the rotor core 25 is shrink-fitted to the small diameter portion 17a at a position abutting against the step surface 17d.

Thereafter, as illustrated in Fig. 3(b), the magnet 18 is inserted into the receiving hole 25d of the main body portion 25a. Before inserting the magnet 18 into the receiving hole 25d, for example, an adhesive agent is applied to a surface of the magnet 18 on the outer side in the radial direction of the shaft 17.

As illustrated in Fig. 3(c), the warmed end plate 27 faces the other end surface 25e of the main body portion 25a. The end plate 27 is pressed in the axial direction of the shaft 17. The tapered portion 17e, the annular groove 17g, and the minimum portion 17f of the shaft 17 are inserted through the central hole 27a of the end plate 27. The end plate 27 abuts against the other end surface 25e of the main body portion 25a. When the end plate 27 cools down, the end plate 27 is shrink-fitted to the minimum portion 17f at a position abutting against the other end surface 25e of the main body portion 25a.

As illustrated in Fig. 3(d), the shaft 17, the rotor core 25, and the end plate 27 are turned upside down. The warmed end plate 26 faces the end surface 25c of the main body portion 25a. The end plate 26 is pressed in the axial direction of the shaft 17. The large diameter portion 17b of the shaft 17 is inserted through the central hole 26a of the end plate 26. The end plate 26 abuts against the end surface 25c of the main body portion 25a. When the end plate 26 cools down, the end plate 26 is shrink-fitted to the large diameter portion 17b at a position where the end plate 26 abuts against the end surface 25c of the main body portion 25a.

As described above, in the electric supercharger C, the rotor core 25 directly abuts against the step surface 17d without interposing the end plate 26. Therefore, the axial length of the shaft 17 is shortened without changing the axial length of the rotor core 25. In other words, by the length of the shaft 17 shortened in the axial direction while the length of the rotor core 25 is maintained that faces the stator 10 in the axial direction and affects the performance of the electric motor 9, it is possible to reduce the weight of rotary parts, or reduce the moment of inertia. As a result, it is possible to reduce the weight of the rotary parts, or to reduce the moment of inertia while deterioration in the performance of the electric motor 9 is suppressed.

In addition, as compared with a case where the rotor core 25 is positioned with the end plate 26 interposed between the step surface 17d and the rotor core 25, variations in the thickness of the end plate 26 do not affect the positioning accuracy of the rotor core 25. Therefore, the positional accuracy of the rotor core 25 with respect to the shaft 17 in the axial direction is improved. Furthermore, by improving the positional accuracy of the rotor core 25 in the axial direction with respect to the shaft 17, it is possible to reduce variations in the performance of the electric motor 9.

Here, each of the rotor core 25 and the ball bearing 19 is incorporated in the shaft 17, and positions in the axial direction with respect to the shaft 17 are thereby determined. For example, in the electric supercharger C, a large axial force acts on the shaft 17 to move toward the compressor impeller 21 side during operation. Therefore, the position of the ball bearing 19 in the axial direction of the shaft 17 may be determined by being in contact with an accommodation wall 2g (see Fig. 1) of the motor housing 2 on the compressor impeller 21 side. In this case, as described above, the position of the stator 10 in the axial direction is determined by the locking surface 2d of the motor housing 2. Therefore, with respect to a portion where the starter 10 and the rotor core 25 face in the radial direction, the accuracy of the length in the axial direction is improved.

Furthermore, for example, the end plate 26 is arranged between the ball bearing 19 and the ball bearing 20. Therefore, the axial distance between the ball bearing 19 and the ball bearing 20 can be shortened. In this case, it is possible to secondarily increase the dangerous speed of a high order such as a bending mode of the shaft 17. Furthermore, for example, the end plate 26 is disposed on the side opposite to the compressor impeller 21 with the ball bearing 19 interposed therebetween in the axial direction. Therefore, the axial distance between the compressor impeller 21 and the ball bearing 20 is shortened.

Although the Embodiment have been described with reference to the accompanying drawings, it is naturally understood that the present disclosure is not limited to the above Embodiment. It is clear that those skilled in the art can conceive various modifications or variations within the scope described in the claims, and it is understood that they are naturally also within the technical scope.

For example, in the embodiment described above, the case where the end plates 26 and 27 are non-magnetic bodies (that are, not ferromagnetic bodies) has been described. However, the end plate 26 and the end plate 27 may not be a non-magnetic body. In a case where the end plates 26 and 27 are non-magnetic bodies, magnetic fluxes at both end surfaces of the magnet 18 are unlikely to be affected by the end plates 26 and 27. Therefore, leakage of the magnetic fluxes on the both end surfaces of the magnet 18 in the axial direction is reduced.

Furthermore, a protrusion integrally formed on the shaft 17 may be used instead of one of the end plates 26 and 27. In this case, in order to allow the end plates 26 and 27 to be non-magnetic bodies, the shaft 17 has to be also a non-magnetic body. For example, as described in the above embodiment, in a case where the end plates 26 and 27 of non-magnetic bodies are provided separately from the shaft 17, the following effects are obtained. That is, the degree of freedom of selecting a material for the shaft 17 is improved.

Furthermore, in the embodiment described above, the case has been described where the position of the outer circumferential surface 17b₁ of the large diameter portion 17b in the radial direction of the shaft 17 is positioned inward with respect to the receiving hole 25d. However, the position of the outer circumferential surface 17b₁ of the large diameter portion 17b in the radial direction of the shaft 17 may be positioned outward with respect to the receiving hole 25d. Even in this case, if at least a part of the magnet 18 accommodated in the receiving hole 25d faces the end plate 26, an event that the magnet 18 jumps out from the receiving hole 25d is avoided. However, in a case where the position of the outer circumferential surface 17b₁ of the large diameter portion 17b in the radial direction of the shaft 17 is inward with respect to the receiving hole 25d, contact between the large diameter portion 17b and the magnet 18 is avoided. As a result, even if the shaft 17 is made of a ferromagnetic body, the magnetic flux at the end surface of the magnet 18 is unlikely to be influenced due to the large diameter portion 17b. Therefore, leakage of magnetic flux on the end surface of the magnet 18 in the axial direction is reduced.

Furthermore, in the embodiment described above, the case where the annular groove 17c is provided in the small diameter portion 17a of the shaft 17 has been described. However, the annular groove 17c may be omitted. In a case where the annular groove 17c is not provided, subjecting the shaft 17 to cutting work, for example, results in a slightly curved (R surface) shape remaining in an end portion of the small diameter portion 17a on the step surface 17d side depending on a processing tool. There is a possibility that the shaft 17 is not be inserted into the rotor core 25 up to a position where the end surface 25c of the rotor core 25 is brought into surface contact with the step surface 17d by being obstructed by the curved shape of the small diameter portion 17a. In the case of providing the annular groove 17c, such a curved surface shape is prevented, and a large contact area between the step surface 17d of the shaft 17 and the end surface 25c of the rotor core 25 is secured. Therefore, it is possible to stably perform positioning of the rotor core 25 with respect to the shaft 17 in the axial direction.

Furthermore, in the embodiment described above, the case where the end plate 27 is fixed to the minimum portion 17f of the shaft 17 has been described. However, the end plate 27 may be attached to the shaft 17 by extending the small diameter portion 17a without providing the minimum portion 17f. In the case where the minimum portion 17f is provided, the end plate 27 can be attached to the shaft 17 at the minimum portion 17f having a different diameter from that of the small diameter portion 17a to which the main body portion 25a of the rotor core 25 is fixed. Therefore, the degree of freedom of selecting a material for the rotor core 25 and the end plate 27 in accordance with the strength, coefficient of linear expansion, and the like is improved. Moreover, a portion of the shaft 17 to which the rotor core 25 is attached needs to have a high dimensional accuracy or surface roughness from the perspective of strength or the like. Therefore, this portion of the shaft 17 takes time to process. In the case of providing the minimum portion 17f as described above, it is possible to easily process separately, for example, a portion to which the rotor core 25 is fixed and a portion to which the end plate 27 is fixed. Therefore, it is possible to improve the efficiency of machining operation, such as shortening machining time of the shaft 17.

Furthermore, in the embodiment described above, the case where the two end plates 26 and 27 are provided has been described. However, the end plate 27 is not indispensable. For example, the other end 25d₂ of the receiving hole 25d in the main body portion 25a may not penetrate through, and the end plate 27 may not be provided.

### Industrial Applicability

The present disclosure can be applied to an electric supercharger in which a rotor core is provided to a shaft.

### Reference Signs List

- C: Electric supercharger
- 2: Motor housing (housing)
- 11: Rotor
- 17: Shaft
- 17a: Small diameter portion
- 17a₁: Outer circumferential surface
- 17b: Large diameter portion
- 17b₁: Outer circumferential surface
- 17c: Annular groove
- 17d: Step surface
- 18: Magnet
- 25: Rotor core
- 25a: Main body portion
- 25c: One end surface
- 25d: Receiving hole
- 26: End plate

## Claims

1. An electric supercharger, comprising:
a shaft comprising a small diameter portion, a large diameter portion having a larger diameter than that of the small diameter portion, and a step surface extending in a radial direction from an outer circumferential surface of the small diameter portion to an outer circumferential surface of the large diameter portion;
a rotor core in which one end surface of a main body portion through which the small diameter portion is inserted abuts against the step surface, the rotor core formed with, in the main body portion, a receiving hole that is opened to the end surface;
a magnet accommodated in the receiving hole; and
an end plate inserted with the large diameter portion and facing at least a part of the magnet accommodated in the receiving hole.

2. The electric supercharger according to claim 1, wherein the end plate is a non-magnetic body.

3. The electric supercharger according to claim 1, wherein a position of the outer circumferential surface of the large diameter portion in the radial direction of the shaft is positioned inward with respect to the receiving hole.

4. The electric supercharger according to claim 2, wherein a position of the outer circumferential surface of the large diameter portion in the radial direction of the shaft is positioned inward with respect to the receiving hole.

5. The electric supercharger according to claim 1, wherein an annular groove is formed in the small diameter portion adjacent to the step surface.

6. The electric supercharger according to claim 2, wherein an annular groove is formed in the small diameter portion adjacent to the step surface.

7. The electric supercharger according to claim 3, wherein an annular groove is formed in the small diameter portion adjacent to the step surface.

8. The electric supercharger according to claim 4, wherein an annular groove is formed in the small diameter portion adjacent to the step surface.
